# EUROPEAN PATENT APPLICATION

(11) **EP 4 438 879 A1**
(43) Date of publication of application: **02.10.2024**
(21) Application number: 24167770.7
(22) Date of filing: 28.03.2024
(51) Int. Cl.: F02C 7/32, F02C 3/113, F02C 7/36, F02K 5/00

(54) **POWER COUPLING BETWEEN ENGINE ROTATING ASSEMBLY AND EXTERNAL DEVICE**

(30) Priority: 31.03.2023 US 202318129640
(71) Applicant: PRATT & WHITNEY CANADA CORP., Longueuil, Québec J4G 1A1 (CA)
(72) Inventor: DUROCHER, Eric S., (01BE5) Longueuil, J4G 1A1 (CA); LANDRY-DROLET, Guillaume, (01BE5) Longueuil, J4G 1A1 (CA); WEAVER, Paul, (01BE5) Longueuil, J4G 1A1 (CA); ABDELNOUR, Michel, (01BE5) Longueu, J4G 1A1 (CA); FLAMAND, Louis, (01BE5) Longueu, J4G 1A1 (CA); LABRECQUE, Michel, (01BE5) Longueu, J4G 1A1 (CA)
(74) Representative: Dehns

(57) **Abstract**

An aircraft system is provided that includes an open propulsor rotor (28), a gas turbine engine (32), an electric machine (34) and a drivetrain (36). The gas turbine engine (32) includes a first rotating assembly (68), a compressor section (42), a combustor section (43), a turbine section (44) and a flowpath (40) extending through the compressor section (42), the combustor section (43) and the turbine section (44). The first rotating assembly (68) is coupled to and is configured to drive rotation of the open propulsor rotor (28). The first rotating assembly (68) includes a first turbine rotor (56) in the turbine section (44). The electric machine (34) is outside of the gas turbine engine (32). The electric machine (34) includes an electric machine rotor (76). The drivetrain (36) couples the electric machine rotor (76) to the first rotating assembly (68).

## Description

### TECHNICAL FIELD

This disclosure relates generally to an aircraft and, more particularly, to a power coupling for an aircraft powerplant.

### BACKGROUND INFORMATION

A powerplant for an aircraft may include a gas turbine engine and an electric generator. The electric generator may be coupled to the gas turbine engine through an accessory gearbox. Various types and configurations of accessory gearboxes as well as techniques for coupling an accessory gearbox to a gas turbine engine are known in the art. While these known gearboxes and coupling techniques have various benefits, there is still room in the art for improvement.

### SUMMARY

According to an aspect of the present disclosure, an aircraft system is provided that includes an open propulsor rotor, a gas turbine engine, an electric machine and a drivetrain. The gas turbine engine includes a first rotating assembly, a compressor section, a combustor section, a turbine section and a flowpath extending through the compressor section, the combustor section and the turbine section. The first rotating assembly is coupled to and is configured to drive rotation of the open propulsor rotor. The first rotating assembly includes a first turbine rotor in the turbine section. The electric machine is outside of the gas turbine engine. The electric machine includes an electric machine rotor. The drivetrain couples the electric machine rotor to the first rotating assembly.

According to another aspect of the present disclosure, another aircraft system is provided that includes an open propulsor rotor, a gas turbine engine, an apparatus and a drivetrain. The gas turbine engine includes a first rotating assembly, a compressor section, a combustor section, a turbine section and a flowpath extending through the compressor section, the combustor section and the turbine section. The first rotating assembly is coupled to and is configured to drive rotation of the open propulsor rotor. The first rotating assembly includes a first turbine rotor in the turbine section. The apparatus is outside of the gas turbine engine. The apparatus includes an apparatus rotor. The drivetrain couples the apparatus rotor to the first rotating assembly. The drivetrain is configured as or otherwise includes a tower shaft.

According to still another aspect of the present disclosure, another aircraft system is provided that includes a propulsor rotor, a gas turbine engine, an apparatus and a drivetrain. The gas turbine engine includes a first rotating assembly, a compressor section, a combustor section, a turbine section and a flowpath extending through the compressor section, the combustor section and the turbine section. The first rotating assembly is coupled to and is configured to drive rotation of the propulsor rotor. The first rotating assembly includes a first turbine rotor in the turbine section. The apparatus is outside of the gas turbine engine. The apparatus includes an apparatus rotor. The drivetrain couples the apparatus rotor to the first rotating assembly. The drivetrain is coupled to the first rotating assembly at a location. The first turbine rotor is between the location and the open propulsor rotor.

The following optional features may be applied individually, or in any combination, to any of the above aspects of the invention:
The apparatus may be configured as or otherwise include an electric machine.
The apparatus may be configured as or otherwise include a hydraulic pump.
The apparatus may be configured as or otherwise include a pneumatic pump.

The electric machine may be configured as or otherwise include an electric generator. The first rotating assembly may be configured to drive rotation of the electric machine rotor through the drivetrain.

The electric machine may be configured as or otherwise include an electric motor. The electric machine rotor may be configured to drive rotation of the first rotating assembly through the drivetrain.

The drivetrain may be configured as or otherwise include a tower shaft.

The drivetrain may also include a ring gear and a pinion. The ring gear may be connected to the rotating assembly. The pinion may be connected to the tower shaft and meshed with the ring gear.

The drivetrain may also include a gearbox coupling the tower shaft to the electric machine rotor.

The first rotating assembly may include a geartrain rotatably coupled between the first turbine rotor and the open propulsor rotor. The drivetrain may be configured as or otherwise include gearing coupled to the geartrain.

The first rotating assembly may include a geartrain rotatably coupled between the first turbine rotor and the open propulsor rotor. The drivetrain may include a ring gear, a pinion gear and an idler gear meshed with and between the ring gear and the pinion gear. The ring gear may be coupled to the geartrain. The pinion gear may be coupled to the electric machine rotor.

The drivetrain may be coupled to the first rotating assembly at an intermediate location axially between the first turbine rotor and the open propulsor rotor.

The first rotating assembly may include a geartrain rotatably coupled between the first turbine rotor and the open propulsor rotor. The intermediate location may be axially between the first turbine rotor and the geartrain.

The drivetrain may be coupled to the first rotating assembly at a location. The first turbine rotor may be axially between the location and the open propulsor rotor.

The first rotating assembly may be configured without a compressor rotor.

The gas turbine engine may also include a second rotating assembly. The second rotating assembly may include a compressor rotor in the compressor section, and a second turbine rotor in the turbine section.

The second turbine rotor may be axially between the compressor rotor and the first rotating assembly.

A compressor rotor may be in the compressor section. A second turbine rotor may be in the turbine section.

The open propulsor rotor may be configured as or otherwise include a propeller rotor.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic sectional illustration of an aircraft system.
FIG. 2 is a schematic illustration of an electric machine coupled with a power source and an engine rotating assembly.
FIG. 3 is an enlarged illustration of a portion of the aircraft system of FIG. 1.
FIG. 4 is a partial sectional illustration of the aircraft system configured with a drivetrain at an aft location along the engine rotating assembly.
FIG. 5 is a partial schematic cutaway illustration of another drivetrain coupling the engine rotating assembly to the electric machine.

### DETAILED DESCRIPTION

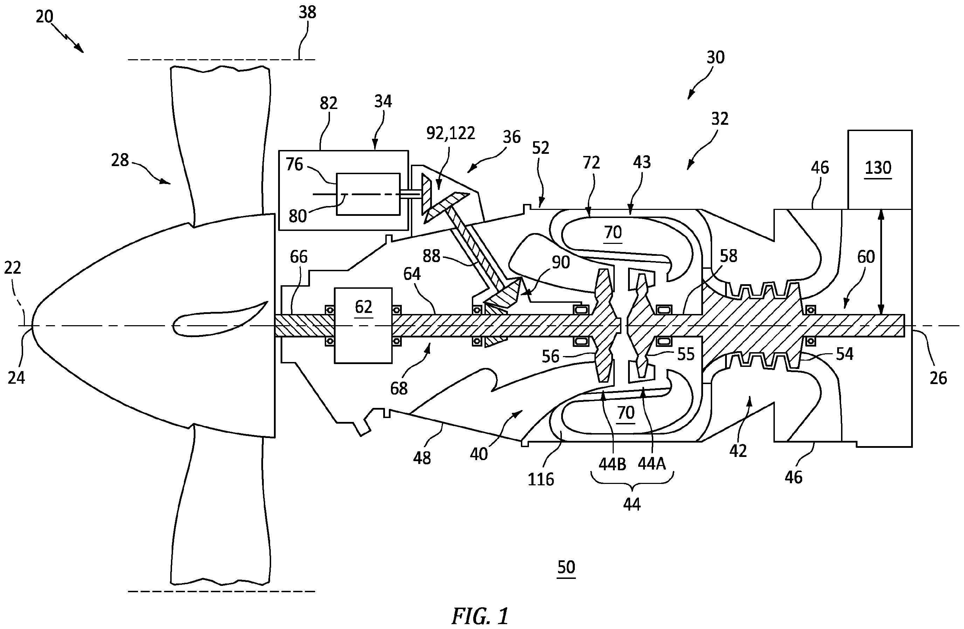

FIG. 1 illustrates a system 20 for an aircraft such as an airplane. This aircraft system 20 is configured as or otherwise includes a propulsion system for the aircraft. The aircraft propulsion system may be an open rotor propulsion system such as, but not limited to, a turboprop propulsion system. Alternatively, the aircraft propulsion system may be a ducted propulsion system such as, but not limited to, a turbofan propulsion system. However, for ease of description, the aircraft system 20 may be generally described below as the open rotor propulsion system; e.g., the turboprop propulsion system.

The aircraft system 20 of FIG. 1 extends axially along an axis 22 between an upstream, forward end 24 of the aircraft system 20 and a downstream, aft end 26 of the aircraft system 20. The axis 22 may be a centerline axis and/or a rotational axis of the aircraft system 20 and/or one or more of its members. The aircraft system 20 includes a propulsor rotor 28 and a powerplant 30 configured to power (e.g., mechanically drive rotation of) the propulsor rotor 28. The powerplant 30 includes a gas turbine engine 32, an electric machine 34 and a drivetrain 36.

The propulsor rotor 28 of FIG. 1 is arranged at (e.g., on, adjacent or proximate) the system forward end 24. This propulsor rotor 28 is configured as a (e.g., unshrouded) bladed rotor. The propulsor rotor 28 may be an open propulsor rotor (e.g., an un-ducted rotor) such as a propeller rotor for the turboprop propulsion system. Other examples of the open rotor include, but are not limited to, an open rotor for a propfan propulsion system, an open rotor for a pusher fan propulsion system and a (e.g., main) helicopter rotor for a turboshaft propulsion system. Alternatively, the propulsor rotor 28 may be a ducted rotor such as a fan rotor for the turbofan propulsion system. Where the propulsor rotor 28 is a ducted rotor, the propulsor rotor 28 is housed within a duct 38 (see dashed line) such as a fan duct. The present disclosure, however, is not limited to the foregoing exemplary open and ducted propulsor rotor configurations and the propulsor rotor 28 may be configured as another type of air mover. However, for ease of description, the propulsor rotor 28 may be generally described below as the open propulsor rotor; e.g., the propeller rotor.

The gas turbine engine 32 includes a core flowpath 40, a compressor section 42, a combustor section 43 and a turbine section 44. The turbine section 44 of FIG. 1 includes a high pressure turbine (HPT) section 44A and a low pressure turbine (LPT) section 44B, which LPT section 44B may also be referred to as a power turbine (PT) section of the gas turbine engine 32.

The core flowpath 40 extends sequentially through the compressor section 42, the combustor section 43, the HPT section 44A and the LPT section 44B from an airflow inlet 46 into the core flowpath 40 to a combustion products exhaust 48 from the core flowpath 40. The core inlet 46 may be an airflow inlet into the gas turbine engine 32 from an external environment 50, which external environment 50 may be an environment outside of the gas turbine engine 32 and, more generally, the aircraft system 20. The core inlet 46 may be disposed at or about a downstream, aft end of the gas turbine engine 32. The core inlet 46 of FIG. 1, for example, is disposed axially aft of any one or more of the engine sections 42-44B, for example axially between the compressor section 42 and the system aft end 26. The core exhaust 48 may be a combustion products exhaust from the gas turbine engine 32 into the external environment 50. The core exhaust 48 may be arranged at or about an upstream, aft end of the gas turbine engine 32. The core exhaust 48 of FIG. 1, for example, is disposed axially forward of any one or more of the engine sections 42-44B, for example axially between the LPT section 44B and the system forward end 24 and/or the propulsor rotor 28.

The engine sections 42-44B are arranged within an engine housing 52. Each of the engine sections 42, 44A and 44B includes a respective bladed rotor 54-56. Each of these bladed rotors 54-56 includes a plurality of rotor blades arranged circumferentially around and connected to one or more respective rotor disks or hubs. The rotor blades, for example, may be formed integral with or mechanically fastened, welded, brazed, adhered and/or otherwise attached to the respective rotor disk(s) / hub(s).

The turbine section 44 of FIG. 1 is disposed axially along the axis 22 between the propulsor rotor 28 and the combustor section 43. More particularly, the HPT section 44A and its HPT rotor 55 are disposed axially along the axis 22 between (a) the LPT section 44B and its LPT rotor 56 and (b) the compressor section 42 and its compressor rotor 54. The LPT section 44B and its LPT rotor 56 are disposed axially along the axis 22 between (a) the HPT section 44A and its HPT rotor 55 and (b) the propulsor rotor 28. The combustor section 43 of FIG. 1 is disposed radially outboard of and axially overlaps the turbine section 44 and one or more of its turbine rotors 55 and 56. The present disclosure, however, is not limited to such an exemplary arrangement of the engine sections along the axis 22.

The compressor rotor 54 is connected to the HPT rotor 55 through a high speed shaft 58. At least (or only) the compressor rotor 54, the high speed shaft 58 and the HPT rotor 55 may collectively form a high speed (HS) rotating assembly 60 of the gas turbine engine 32. The LPT rotor 56 is connected to a (e.g., epicyclic) geartrain 62 through a low speed shaft 64. The geartrain 62 is connected to the propulsor rotor 28 through a propulsor shaft 66. This geartrain 62 may provide a speed change mechanism between the low speed shaft 64 and the propulsor shaft 66 such that the propulsor rotor 28 may rotate at a different (e.g., slower) rotational speed than the LPT rotor 56. At least (or only) the LPT rotor 56, the low speed shaft 64, the geartrain 62 and the propulsor shaft 66 may collectively form a low speed (LS) rotating assembly 68 of the gas turbine engine 32. In other embodiments, however, the LS rotating assembly 68 may have a direct drive configuration where, for example, the geartrain 62 is omitted and the propulsor shaft 66 is directly connected to (or configured integral with) the low speed shaft 64.

The rotating assemblies 60 and 68 and their shafts 58, 64 and 66 are supported by a plurality of bearings. Each of these bearings is connected to the engine housing 52 by one or more support structures; e.g., struts, frames, etc. Each of the rotating assemblies 60 and 68 may thereby be rotatable about the axis 22, or another respective rotational axis.

During gas turbine engine operation, air enters the core flowpath 40 through the core inlet 46 and is directed into the compressor section 42. The air within the core flowpath 40 may be referred to as "core air". This core air is compressed by the compressor rotor 54 and is directed into a combustion chamber 70 (e.g., an annular chamber) of a combustor 72 within the combustor section 43. The fuel is injected into the combustion chamber 70 by one or more fuel injectors and mixed with the compressed air to provide a fuel-air mixture. This fuel-air mixture is ignited and combustion products thereof flow through and sequentially cause the HPT rotor 55 and the LPT rotor 56 to rotate before being exhausted from the gas turbine engine 32 through the core exhaust 48. The rotation of the HPT rotor 55 drives rotation of the compressor rotor 54 and, thus, compression of the air received from the core inlet 46. The rotation of the LPT rotor 56 and, more generally, the LS rotating assembly 68 provides mechanical power for driving (e.g., rotating) the propulsor rotor 28. The rotation of the propulsor rotor 28 propels additional air (e.g., air in the external environment 50, or air within the duct 38) in an aft direction (e.g., away from the system forward end 24 and towards the system aft end 26) to provide the aircraft with forward thrust. The present disclosure, however, is not limited to such an exemplary gas turbine engine. The LS rotating assembly 68, for example, may also include a compressor rotor. In another example, the gas turbine engine 32 may include more than two rotating assemblies.

The electric machine 34 may be disposed outside of the gas turbine engine 32. The electric machine 34 of FIG. 1, for example, is attached to an exterior of the engine housing 52. The present disclosure, however, is not limited to the foregoing exemplary electric machine location.

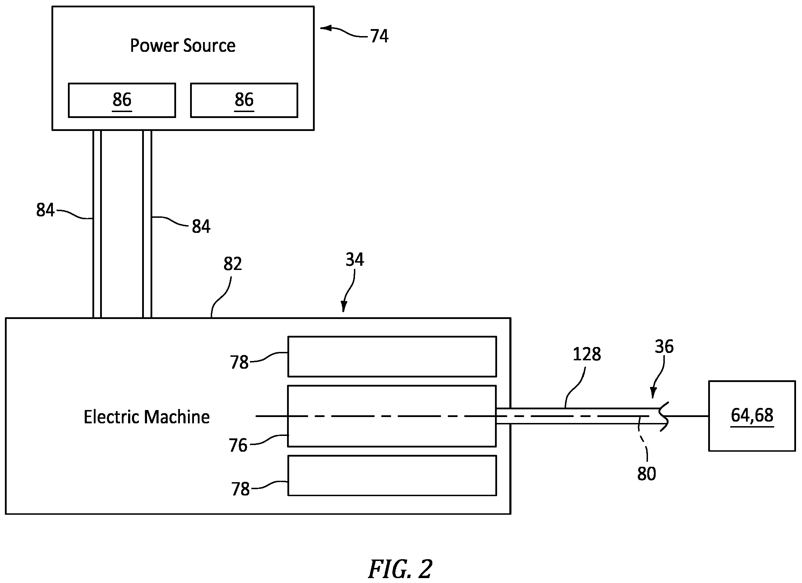

Referring to FIG. 2, the electric machine 34 may be configurable as an electric generator and/or an electric motor. For example, during a generator mode of operation, the electric machine 34 may be operable as the electric generator to convert mechanical power received from, for example, the gas turbine engine 32 (see FIG. 1) and its LS rotating assembly 68 into electricity. This electricity may be utilized for various purposes within the aircraft system 20 (see FIG. 1) such as, for example, electrically powering one or more electric components of the aircraft system 20 and/or charging a power source 74. The electricity may also or alternatively be utilized for various purposes outside of the aircraft system 20 such as, for example, electrically powering one or more electric components in the aircraft. During a motor mode of operation, the electric machine 34 may operate as the electric motor to convert electricity received from the power source 74 into mechanical power. This mechanical power may be provided to the gas turbine engine 32 (see FIG. 1) and its LS rotating assembly 68 to boost power or completely power rotation of the propulsor rotor 28. Of course, in other embodiments, the electric machine 34 may alternatively be configured as a dedicated electric generator (e.g., without the electric motor functionality) or as a dedicated electric motor (e.g., without the electric generator functionality).

The electric machine 34 of FIG. 2 includes an electric machine rotor 76 and an (e.g., annular) electric machine stator 78. The machine stator 78 may be radially outboard of and circumscribe the machine rotor 76. The electric machine 34, however, is not limited to such an exemplary rotor-stator configuration. The machine rotor 76, for example, may alternatively be axially next to or radially outboard of and circumscribe the machine stator 78. The machine rotor 76 of FIG. 2 is rotatable about a rotational axis 80 of the machine rotor 76, which rotational axis 80 may also be an axial centerline of the electric machine 34. Briefly, referring to FIG. 1, the rotational axis 80 may (or may not) be parallel with the axis 22, but radially offset out from the axis 22. Referring again to FIG. 2, the electric machine 34 also includes an electric machine case 82 that at least partially or completely houses the machine rotor 76 and the machine stator 78.

The power source 74 is electrically coupled with the electric machine 34 through one or more electrical leads 84; e.g., high voltage lines. The power source 74 is configured to store electricity. The power source 74 is also configured to provide the stored electricity to the electric machine 34 and/or receive electricity from the electric machine 34; e.g., during power source recharging. The power source 74, for example, may be configured as or otherwise include one or more batteries 86 and/or one or more other electric storage devices.

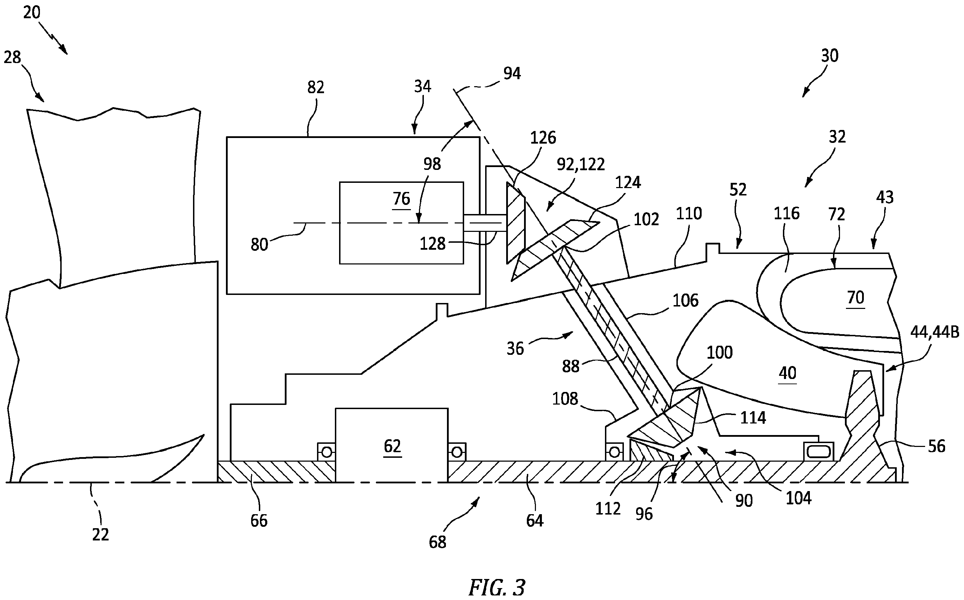

Referring to FIG. 3, the drivetrain 36 is configured to couple the machine rotor 76 to the LS rotating assembly 68. The drivetrain 36 of FIG. 3, for example, includes a tower shaft 88, an inner coupling 90 and an outer coupling 92; e.g., a gearbox.

The tower shaft 88 is rotatable about a rotational axis 94 of the tower shaft 88. This rotational axis 94 is angularly offset from each axis 22, 80 by a respective angle 96, 98. Each angle 96, 98 of FIG. 3 is a non-zero acute angle; e.g., equal to or greater than thirty degrees (30°) and less than ninety degrees (90°). However, in other embodiments, it is contemplated one or both angles 96 and/or 98 may be a right angle (90°). The tower shaft 88 extends longitudinally along its rotational axis 94 between and to an inner end 100 of the tower shaft 88 and an outer end 102 of the tower shaft 88. The shaft inner end 100 may be disposed within a bearing compartment 104 of the gas turbine engine 32. The shaft outer end 102 may be disposed outside of the gas turbine engine 32 and its engine housing 52. The tower shaft 88 of FIG. 3 extends through a tube 106 of the engine housing 52. This housing tube 106 extends between and is connected to a wall 108 of the bearing compartment 104 and an outer case 110 of the engine housing 52. The housing tube 106 may thereby shield the tower shaft 88 from hot internal gases within the gas turbine engine 32 and/or contain lubricant within the bearing compartment 104.

The inner coupling 90 is configured to rotationally couple the tower shaft 88 to the LS rotating assembly 68 and, for example, its low speed shaft 64. The inner coupling 90 of FIG. 3, for example, includes a ring gear 112 and a pinion gear 114. The ring gear 112 circumscribes the LS rotating assembly 68 and its low speed shaft 64. The ring gear 112 is mounted to and fixedly rotatable with the LS rotating assembly 68 and its low speed shaft 64. The pinion gear 114 is arranged at the shaft inner end 100. The pinion gear 114 is mounted to and fixedly rotatable with the tower shaft 88. The pinion gear 114 is also mated (e.g., meshed) with the ring gear 112.

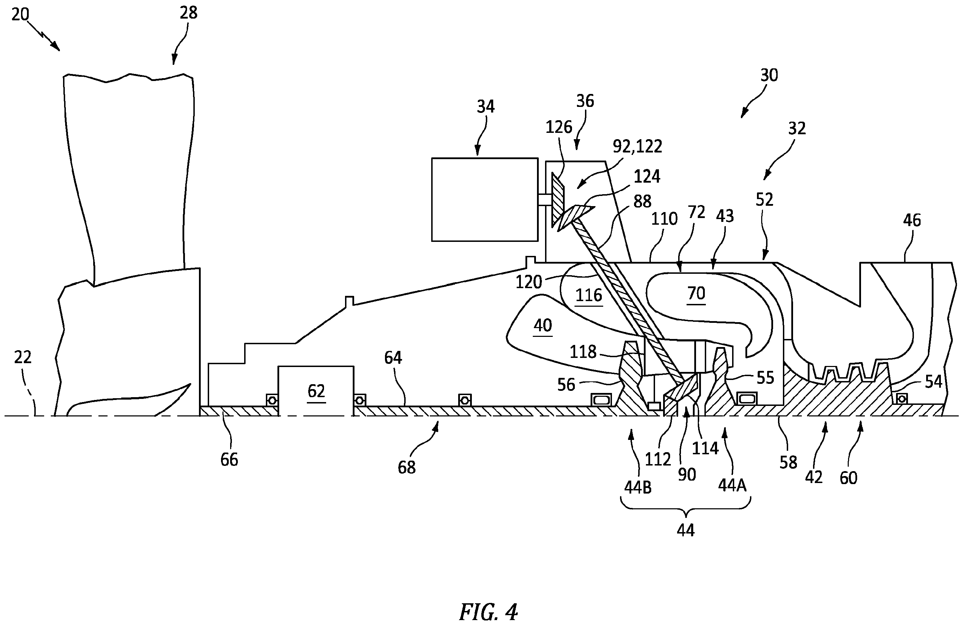

The inner coupling 90 of FIG. 3 couples the drivetrain 36 and its tower shaft 88 to the LS rotating assembly 68 at an intermediate location axially along the LS rotating assembly 68. This coupling location is disposed axially along the axis 22 between the propulsor rotor 28 and the LPT rotor 56. More particularly, the coupling location of FIG. 3 is disposed axially along the axis 22 between the geartrain 62 and the LPT rotor 56. The present disclosure, however, is not limited to such an exemplary coupling location. For example, in other embodiments, the coupling location may be axially between the propulsor rotor 28 and the geartrain 62. In still other embodiments, referring to FIG. 4, the coupling location may be at or about an aft end of the LS rotating assembly 68. The LPT rotor 56 of FIG. 4, for example, is disposed axially along the axis 22 between the propulsor rotor 28 (and the geartrain 62) and the coupling location / the ring gear 112. With such an arrangement, the tower shaft 88 may project across the core flowpath 40 and/or a diffuser plenum 116 surrounding the combustor 72. However, the tower shaft 88 may be protected by and extend through a (e.g., mid-turbine) vane 118 in the turbine section 44 and/or a conduit 120 in the diffuser plenum 116.

Referring again to FIG. 3, the outer coupling 92 is configured to rotationally couple the tower shaft 88 to the electric machine 34 and its machine rotor 76. The outer coupling 92 of FIG. 3, for example, is configured as a gearbox 122. This gearbox 122 may be an angle gearbox with bevel gears 124 and 126. The inner bevel gear 124 is arranged at the shaft outer end 102. The inner bevel gear 124 is mounted to and fixedly rotatable with the tower shaft 88. The outer bevel gear 126 is fixedly rotatable with the machine rotor 76 through, for example, a rotor shaft 128 for the machine rotor 76. The outer bevel gear 126 is also mated (e.g., meshed) with the inner bevel gear 124.

Referring to FIG. 1, with the foregoing arrangement, the electric machine 34 is operable to extract power from the LS rotating assembly 68 to generate electricity when operating in the generator mode of operation. Since the LS rotating assembly 68 of FIG. 1 is configured without a compressor rotor, power may be extracted without significantly affecting performance of the gas turbine engine 32. By contrast, if the electric machine 34 was alternatively configured to extract power from the HS rotating assembly 60, this extraction of power (e.g., when too high) may result in a degradation of gas turbine engine performance. For example, extracting power from the HS rotating assembly 60 may place a rotational drag on the HS rotating assembly 60 thereby impeding acceleration of the HS rotating assembly 60. Under certain conditions, this may lead to exceeding operational limits of the gas turbine engine 32 (e.g., causing compressor surge) as well as impeded (e.g., delaying) rapid increases in aircraft thrust. However, the gas turbine engine 32 of FIG. 1 may include an accessory gearbox 130 rotatably coupled to the HS rotating assembly 60 where, for example, power demand associated with accessories connected to the accessory gearbox 130 is relatively low. Examples of the accessories may include, but are not limited to, a pump, an electric generator and a starter motor.

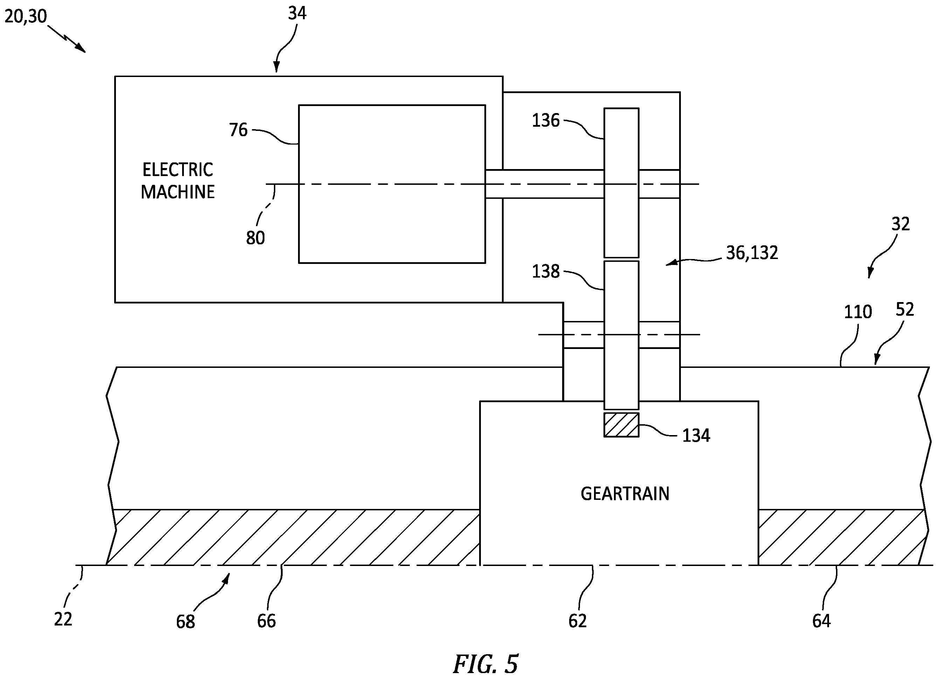

While the drivetrain 36 is described above as including the tower shaft 88, the present disclosure is not limited to such an exemplary configuration. For example, referring to FIG. 5, the drivetrain 36 may alternatively be configured as offset gearing 132. The drivetrain 36 of FIG. 5, for example, includes a ring gear 134, a pinion gear 136 and an idler gear 138. The ring gear 134 may be configured into the geartrain 62. The ring gear 134, for example, may be mounted to or integrated as part of another gear in the geartrain 62. The pinion gear 136 may be fixedly rotatable with the machine rotor 76 through, for example, the rotor shaft 128. The idler gear 138 is disposed between and is mated (e.g., meshed) with the ring gear 134 and the pinion gear 136.

Furthermore, while the drivetrain 36 is described above as coupling the LS rotating assembly 68 to the electric machine 34, the present disclosure is not limited to such an exemplary configuration. The drivetrain 36, for example, may also or alternatively rotationally couple the LS rotating assembly 68 to a (e.g., driven) rotor of another apparatus; e.g., a rotationally driven accessory. Examples of the apparatus (which may be paired with or replace the electric machine 34 in FIGS. 1, 3-5) include, but are not limited to, a hydraulic pump and a pneumatic pump.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An aircraft system, comprising:
an open propulsor rotor (28);
a gas turbine engine (32) including a first rotating assembly (68), a compressor section (42), a combustor section (43), a turbine section (44) and a flowpath (40) extending through the compressor section (42), the combustor section (43) and the turbine section (44), the first rotating assembly (68) coupled to and configured to drive rotation of the open propulsor rotor (28), and the first rotating assembly (68) including a first turbine rotor (56) in the turbine section (44);
an electric machine (34) outside of the gas turbine engine (32), the electric machine (34) comprising an electric machine rotor (76); and
a drivetrain (36) coupling the electric machine rotor (76) to the first rotating assembly (68).

2. The aircraft system of claim 1, wherein
the electric machine (34) comprises an electric generator; and
the first rotating assembly (68) is configured to drive rotation of the electric machine rotor (76) through the drivetrain (36).

3. The aircraft system of claim 1 or 2, wherein
the electric machine (34) comprises an electric motor; and
the electric machine rotor (76) is configured to drive rotation of the first rotating assembly (68) through the drivetrain (36).

4. The aircraft system of any preceding claim, wherein the drivetrain (36) comprises a tower shaft (88).

5. The aircraft system of claim 4, wherein the drivetrain (36) further comprises:
a ring gear (112, 134) connected to the rotating assembly; and
a pinion (114, 136) connected to the tower shaft (88) and meshed with the ring gear (112, 134).

6. The aircraft system of claim 4 or 5, wherein the drivetrain (36) further comprises a gearbox (122) coupling the tower shaft (88) to the electric machine rotor (76).

7. The aircraft system of any preceding claim, wherein:
the first rotating assembly (68) comprises a geartrain (62) rotatably coupled between the first turbine rotor (56) and the open propulsor rotor (28); and
the drivetrain (36) comprises gearing coupled to the geartrain (62).

8. The aircraft system of any of claims 1 to 4, wherein
the first rotating assembly (68) includes a geartrain (62) rotatably coupled between the first turbine rotor (56) and the open propulsor rotor (28);
the drivetrain (36) includes a ring gear (112), a pinion gear (136) and an idler gear (138) meshed with and between the ring gear (112) and the pinion gear (114);
the ring gear (112) is coupled to the geartrain (62); and
the pinion gear (114) is coupled to the electric machine rotor (76).

9. The aircraft system of any preceding claim, wherein the drivetrain (36) is coupled to the first rotating assembly (68) at an intermediate location axially between the first turbine rotor (56) and the open propulsor rotor (28), optionally wherein:
the first rotating assembly (68) includes a or the geartrain (62) rotatably coupled between the first turbine rotor (56) and the open propulsor rotor (28); and
the intermediate location is axially between the first turbine rotor (56) and the geartrain (62).

10. The aircraft system of any of claims 1 to 8, wherein
the drivetrain (36) is coupled to the first rotating assembly (68) at a location; and
the first turbine rotor (56) is axially between the location and the open propulsor rotor (28).

11. The aircraft system of any preceding claim, wherein the first rotating assembly (68) is configured without a compressor rotor.

12. The aircraft system of any preceding claim, wherein the gas turbine engine (32) further includes a second rotating assembly (60), and the second rotating assembly (60) includes:
a compressor rotor (54) in the compressor section (42); and
a second turbine rotor (55) in the turbine section (44), optionally wherein the second turbine rotor is axially between the compressor rotor (54) and the first rotating assembly (68).

13. The aircraft system of any preceding claim, wherein the open propulsor rotor (28) comprises a propeller rotor.

14. An aircraft system, comprising:
an open propulsor rotor (28);
a gas turbine engine (32) including a first rotating assembly (68), a compressor section (42), a combustor section (43), a turbine section (44) and a flowpath (40) extending through the compressor section (42), the combustor section (43) and the turbine section (44), the first rotating assembly (68) coupled to and configured to drive rotation of the open propulsor rotor (28), and the first rotating assembly (68) including a first turbine rotor (56) in the turbine section (44);
an apparatus outside of the gas turbine engine (32), the apparatus comprising an apparatus rotor; and
a drivetrain (36) coupling the apparatus rotor to the first rotating assembly (68), the drivetrain (36) comprising a tower shaft (88), optionally wherein:
the apparatus comprises an electric machine (34); and/or
the apparatus comprises a hydraulic pump; and/or
the apparatus comprises a pneumatic pump.

15. An aircraft system, comprising:
a propulsor rotor (28);
a gas turbine engine (32) including a first rotating assembly (68), a compressor section (42), a combustor section (43), a turbine section (44) and a flowpath (40) extending through the compressor section (42), the combustor section (43) and the turbine section (44), the first rotating assembly (68) coupled to and configured to drive rotation of the propulsor rotor (28), and the first rotating assembly (68) including a first turbine rotor (56) in the turbine section (44);
an apparatus outside of the gas turbine engine (32), the apparatus comprising an apparatus rotor; and
a drivetrain (36) coupling the apparatus rotor to the first rotating assembly (68), wherein the drivetrain (36) is coupled to the first rotating assembly (68) at a location, and the first turbine rotor (56) is between the location and the open propulsor rotor (28).
